# EUROPEAN PATENT APPLICATION

(11) **EP 4 632 890 A1**
(43) Date of publication of application: **15.10.2025**
(21) Application number: 24216470.5
(22) Date of filing: 29.11.2024
(51) Int. Cl.: H01M 50/141, H01M 50/166, H01M 50/171, H01M 50/172, H01M 50/188, H01M 50/197, H01M 50/186

(54) **BATTERY AND METHOD OF MANUFACTURING BATTERY**

(30) Priority: 09.04.2024 KR 20240047930
(71) Applicant: Samsung SDI Co., Ltd., Yongin-si, Gyeonggi-do 17084 (KR)
(72) Inventor: Yoo, Seungyeol, Yongin-si, Gyeonggi-do 17084 (KR); Kim, Heonhee, Yongin-si, Gyeonggi-do 17084 (KR); Kim, Bo Hyun, Yongin-si, Gyeonggi-do 17084 (KR); Choi, Jongnam, Yongin-si, Gyeonggi-do 17084 (KR); Jo, Jinhyeong, Yongin-si, Gyeonggi-do 17084 (KR); Kim, Hyeokjoo, Yongin-si, Gyeonggi-do 17084 (KR)
(74) Representative: Gulde & Partner

(57) **Abstract**

A battery includes an electrode assembly, a case accommodating the electrode assembly, a terminal assembly including a subplate electrically connected to the electrode assembly, a terminal block protruding from the subplate, and a terminal insulator positioned around side surfaces of the terminal block, and a cap plate coupled to the case, with a through-hole being formed in the cap plate. A cap insulator is disposed around the through-hole. The terminal block is inserted into the through-hole such that the terminal insulator and the cap insulator are in contact with each other.

## Description

### BACKGROUND

### Field

The present disclosure relates to a battery and a method of manufacturing the battery.

### Description of the Related Art

Unlike primary batteries that are not designed to be recharged, secondary (or rechargeable) batteries are batteries that are designed to be discharged and recharged. Low-capacity secondary batteries are used in portable small electronic devices, such as smart phones, feature phones, notebook computers, digital cameras, and camcorders. Large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode
assembly.

In direct connection terminals that are welded from outside a cell by bringing a current collector and a terminal plate into close contact, the close contact between the current collector and the terminal plate is the most important factor in determining the quality of welding. When the close contact is not achieved properly, the welding may be defective. However, after the terminal plate is inserted, it is difficult to check from outside whether the current collector and the terminal plate are in close contact. Thus, there is the possibility that the direct connection welding is defective due to the tilt or inclination of the current collector.

In addition, a secondary cell contains an electrolyte solution that facilitates the movement of ions within the cell and maintains electrical neutrality during charging and discharging. In conventional prismatic secondary cells, a main liquid inlet on the cap plate is used to inject electrolyte. However, the increasing demand for higher capacity secondary cells has led to an increase in the amount of electrolyte used in the cells. Therefore, injecting electrolyte through a limited number of inlets may result in a decrease in manufacturing productivity of secondary cells per unit time.

The above information disclosed in this Background section is for enhancement of understanding of the background of the present disclosure, and therefore, it may contain information that does not constitute related (or prior) art.

### SUMMARY

The present disclosure provides a secondary battery and a method of manufacturing a secondary battery able to overcome the problems described above.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

A battery according to embodiments of the present disclosure includes an electrode assembly; a case accommodating the electrode assembly; a terminal assembly including a subplate electrically connected to the electrode assembly, a terminal block protruding from the subplate, and a terminal insulator positioned around side surfaces of the terminal block; and a cap plate coupled to the case, with a through-hole being formed in the cap plate. A cap insulator is positioned around a the through-hole, and the terminal block is inserted into the through-hole such that the terminal insulator and the cap insulator are in contact with each other.

According to embodiments, the cap insulator may be in contact with an entire perimeter of the terminal insulator.

According to embodiments, the terminal insulator and the cap insulator may be bonded together by thermal fusion or with an adhesive.

According to embodiments, the terminal block may include a hollow space formed therein.

According to embodiments, the cap insulator may be formed by insert molding with the cap plate.

According to embodiments, the terminal insulator may be formed by insert molding with the terminal block.

According to embodiments, the cap insulator may include a first protrusion protruding upward, the terminal insulator may include a second protrusion protruding upward, and the first protrusion and the second protrusion may be bonded together.

According to embodiments, the second protrusion may be spaced from the terminal block.

According to embodiments, the cap insulator may have a stepped portion on a side surface of the cap insulator, and the stepped portion being in contact with a top surface of the terminal insulator and a side surface of the terminal insulator.

According to embodiments, the top surface of the terminal insulator may be positioned below a top surface of the terminal block.

According to embodiments, the cap insulator may include a hook portion protruding upward, and the terminal insulator may include a third protrusion protruding upward, the hook portion wrapping around the third protrusion of the third insulator.

According to embodiments, the cap insulator may include an projected portion provided on a side surface to protrude toward the terminal block, and the terminal insulator may include a recessed portion provided on a side surface corresponding to the projected portion.

According to embodiments, the cap insulator may include a recessed portion on a side surface, and the terminal insulator may include an embossed portion provided on a side surface to correspond to the recessed portion.

According to embodiments, the terminal assembly may include a first terminal assembly and a second terminal assembly. The first terminal assembly and the second terminal assembly may be oriented toward the cap plate.

According to embodiments, the terminal assembly may include a first terminal assembly and a second terminal assembly. The first terminal assembly may be oriented toward the cap plate, and the second terminal assembly may be oriented to face a cover plate oriented toward the cap plate.

A method of manufacturing the battery as above according to embodiments of the present disclosure includes preparing a terminal assembly including a subplate electrically connected to an electrode assembly, a terminal block protruding from the subplate, and a terminal insulator disposed around side surfaces of the terminal block; inserting the terminal block through a through-hole provided in a cap plate; and bonding a cap insulator positioned around the through-hole to the terminal insulator.

According to embodiments, the method may further include coupling the cap plate to a case configured to accommodate the electrode assembly.

According to embodiments, the coupling operation may be performed before inserting the terminal assembly into the through-hole.

According to embodiments, the coupling operation may be performed after bonding the terminal assembly and the cap insulator.

According to embodiments, the coupling operation may include welding the cap plate and the case together.

According to some embodiments of the present disclosure, the terminal assembly having the terminal insulator disposed around the side surfaces of the terminal block may be exposed to the outside of the cap plate through the through-hole to overcome the problem of poor weld quality in conventional direct connection terminals.

According to some embodiments of the present disclosure, the terminal assembly may exclude the metal-to-metal welding process that was present for conventional direct connection terminals, and the bonding process may be performed outside the cell by bonding the terminal insulator to the cap insulator by a simpler method than the metal-to-metal welding process. Accordingly, the cost of laser equipment for metal-to-metal welding may be reduced, thereby reducing the cost of battery production.

According to some embodiments of the present disclosure, the metal-to-metal welding process that was present for conventional direct connection terminals may be excluded, thereby eliminating defects associated with debris that have been problematic in the metal-to-metal welding.

According to some embodiments of the present disclosure, because the terminal block has the hollow space therein, the cost of manufacturing a battery and the weight of the battery may be reduced.

However, aspects and features of the present disclosure are not limited to those described above, and other aspects and features not mentioned will be clearly understood by a person skilled in the art from the detailed description.

### BRIEF DESCRIPTION OF DRAWINGS

The drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective diagram showing an example of a battery according to embodiments of the present disclosure;
FIG. 2 are plan diagrams showing shapes of the battery before and after insertion of the electrode assembly according to embodiments of the present disclosure;
FIG. 3 illustrates an enlarged terminal assembly in the cross-section of the battery taken along line A-A' in FIG. 1;
FIG. 4 are cross-sectional diagrams showing an example of a terminal block according to embodiments;
FIGS. 5 to 8 illustrate examples of terminal insulators and cap insulators according to various embodiments;
FIG. 9 illustrates an example of a battery according to a comparative example;
FIG. 10 is a flowchart showing an example of a method of manufacturing a battery according to embodiments of the present disclosure; and
FIGS. 11 and 12 are schematic diagrams showing examples of the method of manufacturing a battery according to various embodiments of the present disclosure.

### DETAILED DESCRIPTION

Hereinafter, embodiments of the present disclosure will be described in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the battery may be a secondary battery. The secondary battery may include an electrode assembly, a first current collector, a first terminal, a second current collector, a second terminal, a case, and a cap assembly.

An electrode assembly may be formed by winding or stacking a stack of a first electrode plate, a separator, and a second electrode plate, which are formed as thin plates or films. When the electrode assembly is a wound stack, a winding axis may be parallel to the longitudinal direction (e.g., the y direction) of the case. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

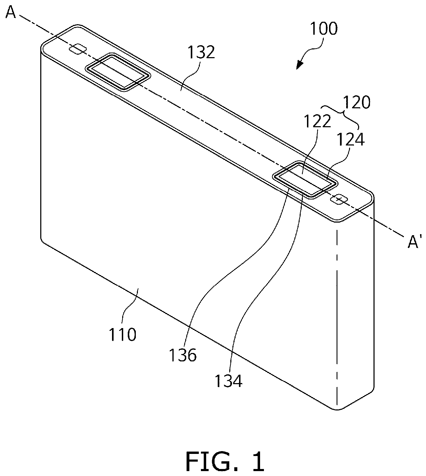

In some embodiments, the first electrode tab may be located on the left side of the electrode assembly, and the second electrode tab may be located on the right side of the electrode assembly. In other embodiments, the first electrode tab and the second electrode tab may be located on one side of the electrode assembly in the same direction. Here, for convenience of description, the left and right sides are defined according to the secondary battery as oriented in FIG. 1, and the positions thereof may change when the secondary battery is rotated left and right or up and down.

The first electrode tab of the first electrode plate and the second electrode tab of the second electrode plate may be respectively positioned at both ends (e.g., opposite ends) of the electrode assembly. In some embodiments, the electrode assembly may be accommodated in the case along with an electrolyte. In addition, in the electrode assembly, the first current collector and the second current collector may be welded and connected to the first electrode tab of the first electrode plate and the second electrode tab of the second electrode plate exposed on both sides, respectively, to then be positioned there at, respectively.

FIG. 1 illustrates a perspective diagram showing an example of a battery according to embodiments of the present disclosure.

Referring to FIG. 1, a battery 100 according to embodiments may include an electrode assembly (not shown), a case 110, a subplate (not shown), terminal assemblies 120, and a cap plate 132.

The case 110 may include side sections configured to receive an electrode assembly and electrolyte, an open portion on a first side, and a closed portion on a second side opposite the open portion. The closed portion may correspond to the cap plate 132. The closed portion has a relatively closed structure compared to the open portion, and the closed portion may include through-holes as desired.

The case 110 may have the shape of a rectangular column, in which on the opposite sides, the first side is open and the second side is closed. In addition, the case is shown in FIG. 1 to have the shape of a prismatic secondary battery, but the present disclosure is not limited thereto, as the shape of the case may vary depending on the type of battery.

The case 110 may be made of any material commonly used in the art to protect the internal components of the battery from, for example, external impact or fire. The case may include a metal case including aluminum, aluminum alloy, nickel-plated steel, or stainless steel, a plastic case including glass fiber reinforced polymer (GFRP), or a combination thereof, as would be selected by those skilled in the art in light of the intended use and functionality of the battery.

The subplate may be electrically connected to the electrode assembly. The subplate may be coupled to at least a first side of the electrode assembly. In particular, the subplate may be electrically connected to a first electrode plate (e.g., a positive electrode plate) or a second electrode plate (e.g., a negative electrode plate) of the electrode assembly. More specifically, the subplate may be coupled to a first electrode tab of the electrode assembly. For example, the first electrode tab may be welded to the subplate.

Each of the terminal assemblies 120 may include a subplate, a terminal block 122 protruding from the subplate, and a terminal insulator 124 disposed around side surfaces of the terminal block 122. The terminal block 122 may be in contact with the subplate. The terminal block 122 may be electrically connected to the electrode assembly via the subplate.

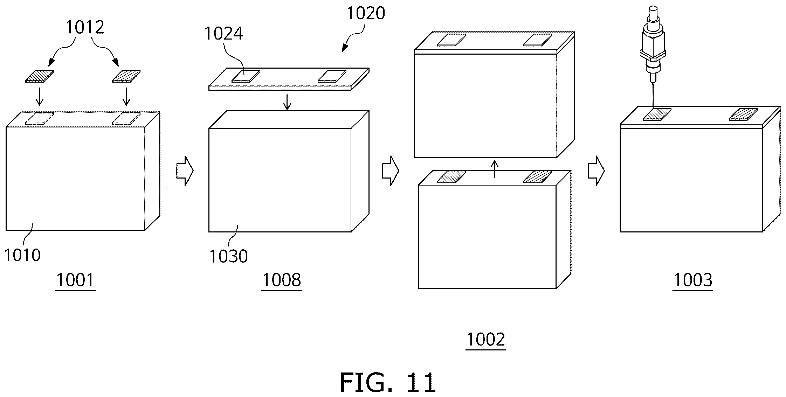

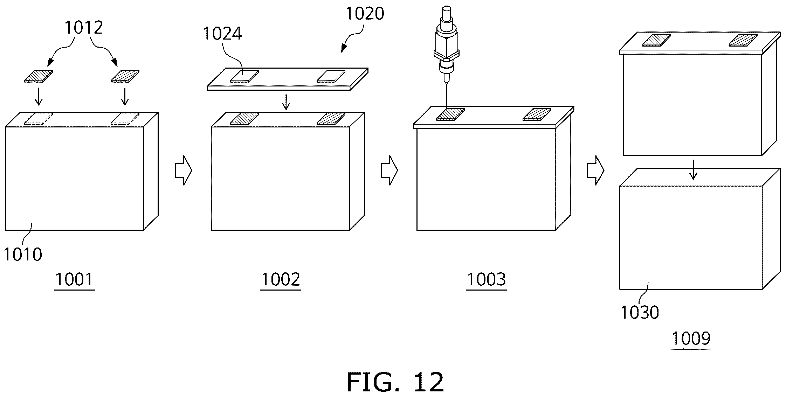

The cap plate 132 may be coupled to the case 110. The process of coupling the cap plate 132 to the case 110 will be described in detail below with reference to FIGS. 11 and 12. An insulating member may be disposed between the subplate and the cap plate 132. The insulating member may prevent the subplate and the cap plate 132 from being electrically connected.

The cap plate 132 may be provided with through-holes 134. Cap insulators 136 may be disposed around the through-holes 134.

According to an embodiment, the terminal block 122 may be inserted into the through-hole 134 so that the terminal insulator 124 contacts the cap insulator 136. The cap insulator 136 and the terminal insulator 124 may be inserted between the cap plate 132 and the terminal block 122 such that the cap insulator 136 and the terminal insulator 124 contact each other. The cap insulator 136 may be disposed adjacent to the cap plate 132, and the terminal insulator 124 may be disposed adjacent to the terminal block 122. Thus, the cap insulator 136 and the terminal insulator 124 may prevent the cap plate and the terminal block from being electrically connected.

The battery 100 according to embodiments may further include a cover plate (not shown) on the bottom side of the battery. The cover plate may be coupled to the open portion of the case 110 located on one side of the case 110 to face the cap plate 132 while covering the entirety of the open portion. The cover plate may be made of the same material as the case 110 or the cap plate 132. Further, the cover plate may include an insulating member or gasket for electrically insulating from the electrode assembly inside the case 110.

The cover plate may be placed on the open portion of the case 110, positioned by tack welding, and then main welded to the long and short sides of the case 110. The cover plate may be welded to the case 110 so that the case 110 is sealed and isolated from the outside. Before the main welding between the case 110 and the cover plate, a surface treatment, such as laser etching, may be performed to decontaminate a weld region.

The cover plate may include vents. The vents may be configured to prevent an explosion of the battery or to prevent a chain exothermic reaction of batteries arranged in close proximity. In an example, the vent may be configured to open when the internal pressure of the battery exceeds a predetermined threshold pressure. The threshold pressure may be set depending on the application, material, purpose, and the like of the secondary battery. In another example, the vent may be configured to open in a case where the internal temperature exceeds a predetermined threshold temperature.

In another example, vents may be provided on a side of the case 110. The vents may be provided on sides of the case 110 or may be provided on the cap plate. In addition, any number of vents may be provided at any position on a first side of the case 110. For example, two vents 314 may be provided on the first side of the case 110.

The terminal assemblies 120 may include a first terminal assembly and a second terminal assembly. The first terminal assembly may be electrically connected to a positive electrode of the electrode assembly, and the second terminal assembly may be electrically connected to a negative electrode of the electrode assembly. In another example, the first terminal assembly may be electrically connected to the negative electrode of the electrode assembly, and the second terminal assembly may be electrically connected to the positive electrode of the electrode assembly.

The first terminal assembly and the second terminal assembly may be oriented toward the cap plate 132. In another example, the first terminal assembly may be oriented toward the cap plate 132, and the second terminal assembly may be oriented toward the cover plate opposite the cap plate 132.

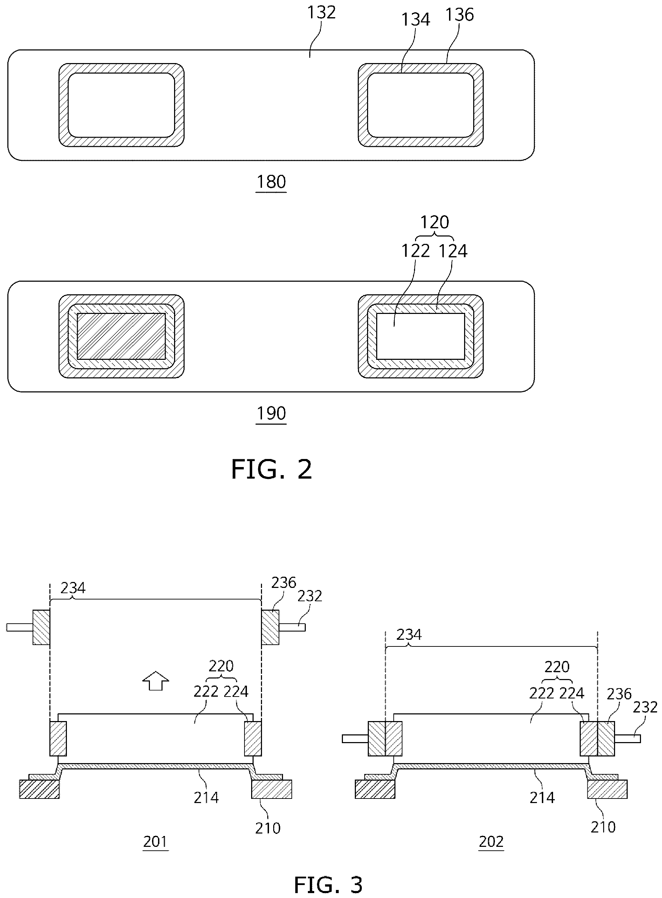

FIG. 2 illustrates plan diagrams showing shapes of the battery before and after insertion of the electrode assembly according to embodiments of the present disclosure.

Referring now to FIG. 2, a first state 180 is the cap plate 132 as viewed from above before the insertion of the electrode assembly into a battery case. One or more through-holes 134 are provided in the cap plate 132, and the cap insulators 136 are disposed along the perimeters of the through-holes 134. As depicted, the through-holes 134 may have a rectangular shape with rounded corners, but the present disclosure not limited thereto, and the through-holes 134 may have various configurations depending on the type and application of the battery. In addition, as shown, a plurality of through-holes 134 are provided, but only a single through-hole may be formed in the cap plate 132 depending on the type and application of the battery.

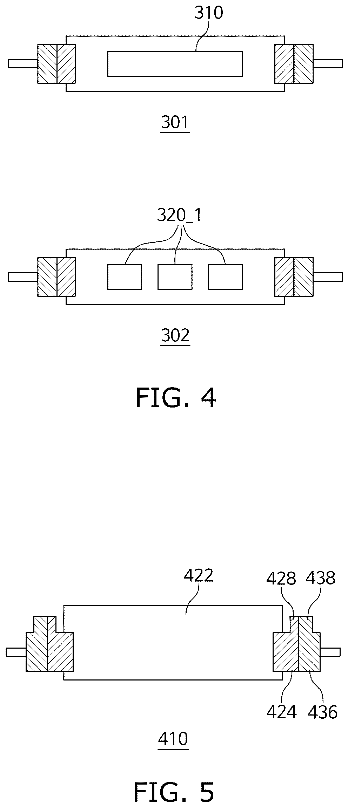

Each of the cap insulators 136 may be disposed along the perimeter of the corresponding through-hole 134 such that inner surface of the cap insulator 136 is set a predetermined distance from the edges of the through-hole 134. Specifically, the cap insulator 136 may be disposed along the perimeter of the through-hole 134 with a predetermined width from the edges of the through-hole 134. The shape of the cap insulator 136 may be configured to correspond to the shape of the terminal assembly 120 inserted into the through-hole 134. Various shapes of the cap insulator 136 will be described in more detail below with reference to FIGS. 5 to 8.

The cap insulator 136 may be made of insulating materials such as polypropylene (PP), polyethylene (PE), polyvinyl chloride (PVC), urethane, nylon, and TEFLON^{®} (polytetrafluoroethylene). However, the material of the cap insulator 136 according to the present disclosure is not limited to these materials and may include a variety of electrically insulating materials.

According to an embodiment, the cap insulator 136 may be formed by insert molding into the cap plate 132. Herein, the term "insert molding" refers to a molding process in which an insert (an external element or accessory) is processed by injecting a raw material into a mold while the insert is present in the mold in order to improve the strength, functionality, and appearance of a part.

The cap insulator 136 may be formed by a process of injecting an insulating material of the cap insulator 136 with the cap plate 132 made of a metal as an insert of a molded product, with the through-hole 134 being formed in the insert cap plate 132. This insert molding process allows the cap insulator 136 to be securely fixed to the cap plate 132, may improve the strength and durability of the overall product, and may improve overall productivity by avoiding a conventional multi-step assembly process.

Referring to FIG. 2, a second state 190 is the cap plate 132 as viewed from above after the insertion of the electrode assembly according to embodiments into the battery case. Specifically, the electrode assembly is inserted into the battery case such that one or more terminal assemblies 120 electrically connected to the electrode assembly are inserted into through the through-holes 134 provided in the cap plate 132.

Each of the terminal assemblies 120 includes the terminal block 122 and the terminal insulator 124. The terminal insulator 124 is disposed around the side surfaces of the terminal block 122. As shown, the terminal block 122 may have a square shape with rounded corners. But the present disclosure is not limited to the depicted shape, and various configurations are possible depending on the type and application of the battery. Also depicted, a plurality of terminal blocks 122 are coupled to the cap plate 132, but there may be only a single terminal block depending on the configuration and type of the battery.

The terminal insulator 124 may be disposed around the side surfaces and thereby maintain a predetermined range of widths from the edges of the side circumference of the terminal block 122. The terminal insulator 124 may be disposed along the perimeter with equal widths from the edges of the terminal block 122. The shape of the terminal insulator 124 may vary to correspond to the shape of the cap insulator 136 disposed in the through-hole 134. Various shapes of the terminal insulator 124 will be described in more detail below with reference to FIGS. 5 to 8.

The terminal insulator 124 may be made of insulating materials such as polypropylene (PP), polyethylene (PE), polyvinyl chloride (PVC), urethane, nylon, and TEFLON^{®}. However, the material of the terminal insulator 124 of the present disclosure is not limited to these materials and may include a variety of electrically insulating materials.

The terminal insulator 124 may be formed by insert molding with the terminal block 122. For example, the terminal insulator 124 may be formed by a process of injecting an insulating material of the terminal insulator 124 to the terminal block 122 made of a metal as an insert of a molded product. This insert molding process allows the terminal insulator 124 to be securely fixed to the terminal block 122, may improve the strength and durability of the overall product, and may improve overall productivity by avoiding a conventional multi-step assembly process.

According to an embodiment, a cap insulator 236 may be in contact with the entire perimeter of a terminal insulator 224. The cap insulator 236 may be bonded to the terminal insulator 224 while in contact with the entire perimeter of the terminal insulator 224, thereby sealing the through-hole in the cap plate. A specific joining method is described with reference to FIG. 3.

FIG. 3 illustrates an enlarged terminal assembly in the cross-section of the battery taken along line A-A' in FIG. 1.

Referring to FIG. 3, a first state 201 is shown in a cross-sectional diagram of a terminal assembly 220 and a cap plate 232 as viewed from a side before insertion of an electrode assembly into a battery case. The subplate 214 may be coupled to at least one side of the electrode assembly 210 and electrically connected to the electrode assembly 210. The terminal assembly 220 includes a terminal block 222 protruding from the subplate 214 and a terminal insulator 224 disposed around the side surfaces of the terminal block 222.

Referring to FIG. 3, a second state 202 is shown in a cross-sectional diagram of the terminal assembly 220 and the cap plate 232 as viewed from a side after the insertion of the electrode assembly into the battery case. After insertion of the electrode assembly into the battery case, the terminal assembly 220 including the terminal block 222 and the terminal insulator 224 may be inserted into a through-hole 234 of the cap plate 232, thereby making the terminal insulator 224 come into contact with cap insulator 236. The terminal insulator 224 and the cap insulator 236 may be bonded while in contact with each other.

After the insertion of the electrode assembly, a portion of the terminal block 222 of the terminal assembly 220 is exposed to outside of the cap plate 232 through the through-hole 234. The top surface of the terminal insulator 224 may be positioned lower than the top surface of the terminal block 222 to form a structure by which the terminal block 222 may easily function as an external electrode of the battery.

The terminal insulator 224 and the cap insulator 236 may be bonded together by thermal fusion. For example, a welding process using a laser, plasma, or the like may be performed to join the terminal insulator 224 and the cap insulator 236. In the welding process using a laser, plasma, or the like, a pressing process using a press or the like may be also be performed.

In addition or in another example, the terminal insulator 224 and the cap insulator 236 may be bonded together with an adhesive. The adhesive may be implemented as a material that is heat resistant and has electrically insulating properties that are safe for the internal environment of the battery cell due. For example, one of epoxy adhesives, silicone adhesives, polyurethane adhesives, polyamide adhesives, or combinations thereof may be used. However, the adhesive of the present disclosure is not limited to these materials and may include a variety of electrically insulating adhesive materials.

The bonding between the terminal insulator 224 and the cap insulator 236 may be configured to be maintained above the vent threshold pressure of the battery. Thus, the vent may function properly against thermal runaway or gas generation within the battery after the bonding between the terminal insulator 224 and the cap insulator 236 is established.

The terminal assembly having the terminal insulator disposed around the side surfaces of the terminal block may be exposed to outside of the cap plate through the through-hole to thereby overcome the problem of poor weld quality in conventional direct connection terminals. The terminal assembly may preclude the need for the metal-to-metal welding process that has been used for the direct connection terminals, and the bonding process may be performed outside the cell by bonding the terminal insulator to the cap insulator by a simpler method than the metal-to-metal welding process. Accordingly, equipment processing for metal-to-metal welding may be reduced, thereby reducing the cost of battery production. Further, the metal-to-metal welding process that was used for the direct connection terminals may be eliminated, thereby eliminating defects associated with debris that have been problematic in metal-to-metal welding.

FIG. 4 are cross-sectional diagrams showing an example of a terminal block according to embodiments of the present disclosure.

As shown in FIG. 4, a terminal block may include a hollow space therein. The hollow space may have a variety of shapes that have a low minimal impact on battery performance, such as resistance and output power, and durability in operation as a terminal. The shape of the hollow space may correspond to a three-dimensional shape such as a polyhedron, e.g., a cuboid, a sphere, a cylinder, or a cone. According to a first embodiment 301, the hollow space 310 may be a single closed space. In another example according to the second embodiment 302, the space 320_1 may include a plurality of closed spaces.

According to some embodiments of the present disclosure, including the hollow space within the interior of the terminal block may reduce the cost of manufacturing the battery and reduce the weight of the battery, thereby resulting in a higher power-to-weight ratio.

FIGS. 5 to 8 illustrate examples of terminal insulators and cap insulators according to various embodiments.

Referring to FIG. 5, in an embodiment 410, a cap insulator 436 may include a first protrusion 438 protruding upward, and a terminal insulator 424 may include a second protrusion 428 protruding upward.

At least a portion of the cap insulator 436 and at least a portion of the terminal insulator 424 may be bonded while being in contact with each other, as described above with reference to FIG. 3. Accordingly, in this embodiment, the first protrusion 438 and the second protrusion 428 may be bonded together.

The top surface of the first protrusion 438 and the top surface of the second protrusion 428 may be aligned to be positioned in the same plane when the terminal insulator 424 and cap insulator 436 are bonded together. This configuration facilitates visually determining a direction in which, and a distance by which, the terminal assembly including a terminal block 422 has moved relative to the cap plate without further inspection. Accordingly, productivity may be improved by reduction resources that are needed to inspect batteries for defects.

The second protrusion 428 may be spaced from the terminal block 422. For example, the second protrusion 428 may be spaced from the terminal block 422 by a distance that is 10% of the width of the terminal block 422. As a result, effects on the terminal block 422 caused by contamination or heating that occur during the process of bonding the first protrusion 438 and the second protrusion 428 together may be reduced. However, the distance by which the second protrusion 428 is spaced apart from the terminal block 422 is not limited to this disclosed embodiment and the distance may be modified by those skilled in the art depending on the type or use of a battery.

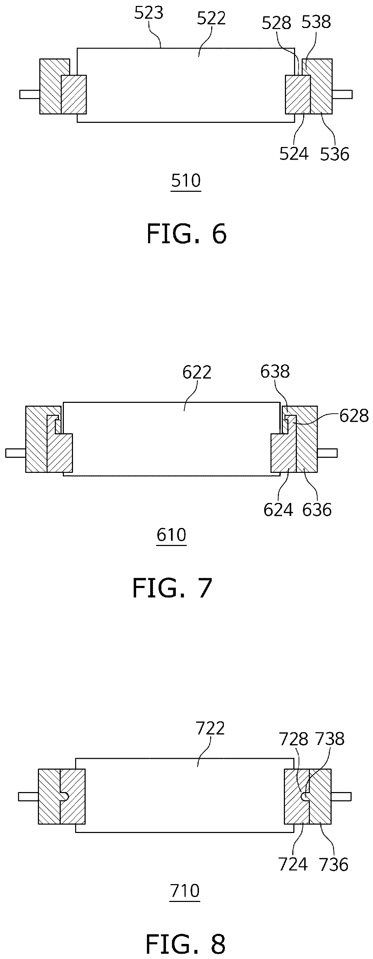

Referring to FIG. 6, in another embodiment 510, a stepped portion 538 may be provided on a side surface of a cap insulator 536. The stepped portion 538 may be in contact with the top surface 528 and a side surface of a terminal insulator 524. In a battery according to the embodiment 510, during insertion of the terminal assembly including the terminal block 522 through the through-hole of the cap plate during the process of manufacturing the battery, the stepped portions 538 may adjust the amount of insertion of the terminal assembly into the cap plate. For example, the terminal assembly may be inserted through the through-hole of the cap plate to the extent that the top surface 528 of the terminal insulator 524 contacts the stepped portion.

At least a portion of the cap insulator 536, at least a portion of the top surface 528, and the side surface of the terminal insulator 524 may be bonded while in contact they are with each other.

In addition, according to this embodiment, the top surface 528 of the terminal insulator 524 or the top surface 536 of the cap insulator 536 may be positioned lower than the top surface 523 of the terminal block 522 to form a configuration such that the terminal block 522 may easily function as an external electrode of the battery.

Referring to FIG. 7, in a third embodiment 610, a cap insulator 636 may include an upwardly protruding hook portion 638, and a terminal insulator 624 may include an upwardly protruding third protrusion 628. The hook portion 638 may have a structure that wraps around the third protrusion 628.

As in the second embodiment 510 of FIG. 6, in the process of manufacturing a battery according to a third embodiment 610, during insertion of a terminal assembly including the terminal block 622 through a through-hole of a cap plate, the amount of insertion of the terminal assembly into the cap plate may be adjusted by resistance provided by the hook portion 638. Specifically, the terminal assembly may be inserted through a through-hole of the cap plate only to the extent that the third protrusion 628 of the terminal insulator 624 is wrapped around the hook portion 638 and is in contact with all of the corresponding surfaces of the hook portion 638. At least a portion of the cap insulator 636 and at least a portion of the terminal insulator 624 may be bonded in a state where the corresponding surfaces of the third protrusion 628 and the hook portion 638 are in contact, as described above with reference to FIG. 3.

The hook portion 638 has a structure that wraps around the third protrusion 628 to securely fix the cap plate and the terminal block 622 from swinging up and down. A recessed portion may be formed on an inside of the hook portion 638, an embossed portion may be formed on a side surface of the third protrusion 628, and the recessed portion of the hook portion 638 may be formed to correspond to the embossed portion of the third protrusion 628. When the embossed portion of the third protrusion 628 is inserted into the recessed portion of the hook portion 638, a stronger bonding force may be formed between the two insulators 624 and 636.

The top surface of the terminal insulator 624 and/or the top surface of the cap insulator 636 may be positioned lower than the top surface of the terminal block 622 such that the terminal block 622 itself may be exposed and may thereby have a structure that facilitates functioning as an external electrode of the battery.

Referring to FIG. 8, in another embodiment 710, a side surface of the cap insulator 736 may have a projected portion 738 that projects toward the terminal block 722, and a side surface of the terminal insulator 724 may have a recessed portion 728 that corresponds to the embossed portion.

As in the embodiment 510 of FIG. 6, in the process of manufacturing a battery according to the embodiment 710, during insertion of a terminal assembly including the terminal block 722 through a through-hole of a cap plate. The amount of insertion of the terminal assembly into the cap plate may be adjusted by frictional resistance provided by the projected portion 738. Specifically, the terminal assembly may be inserted through the through-hole of the cap plate only to the extent that the recessed portion 728 of the terminal insulator 724 wraps around and contacts the projected portion 738. At least a portion of the cap insulator 736 and at least a portion of the terminal insulator 724 may be bonded in a state where the recessed portion 728 and the projected portion 738 are in contact with each other. Thus, according to this embodiment 710, the cap plate and the terminal block 722 may be securely fixed so as to not be movable up and down. In addition, the top surface of the terminal insulator 724 and/or the top surface of the cap insulator 736 may be positioned lower than the top surface of the terminal block 722 such that the terminal block 722 is exposed and has a structure that facilitates functioning as an external electrode of the battery.

According to another alternative embodiment, a side surface of the cap insulator may be provided with a recessed portion and a side surface of the terminal insulator may be provided with a projected portion corresponding to the recessed portion.

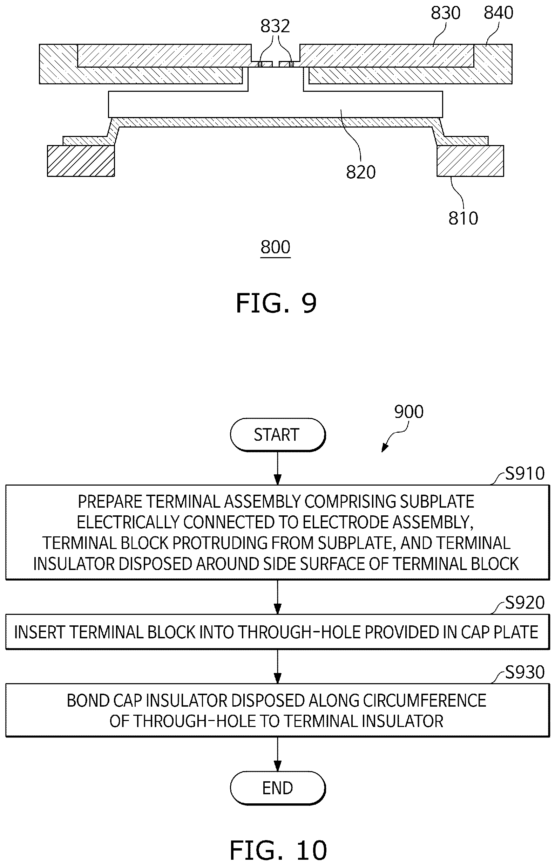

FIG. 9 illustrates an example of a battery according to a comparative example.

In an example of a battery 800 according to the comparative example shown in FIG. 9, a subplate may be coupled and electrically connected to at least one side of the electrode assembly 810, and a current collector 820 may protrude from the subplate while being electrically connected to the subplate and contacting the underside of a terminal plate 830 included in the cap plate 840. Because the terminal plate 830 and the current collector 820 must be in contact with each other in order to electrically connect the electrode assembly 810 and the terminal plate 830, welding 832 was performed outside the battery by bringing the terminal plate 830 and the current collector 820 into close contact with each other. However, there may be a problem in that the terminal plate 830 and the current collector 820 may not make contact even after welding, and there is a problem in that it is difficult to check from outside of the battery whether the terminal plate 830 and the current collector 820 are in sufficient contact.

FIG. 10 illustrates a flowchart showing an example of a method of manufacturing a battery according to embodiments of the present disclosure.

Referring to FIG. 10, a battery manufacturing method 900 may be started by preparing a terminal assembly including a subplate electrically connected to an electrode assembly, terminal blocks protruding from the subplate, and terminal insulators disposed around side surfaces of the terminal blocks in step S910. Each of the terminal blocks may have a hollow space therein. The terminal insulators are formed by insert molding into the terminal plate.

Thereafter, the terminal blocks may be inserted through the through-holes formed in the cap plate in S920. The top surfaces of the terminal insulators are positioned below the top surfaces of the terminal blocks.

Thereafter, cap insulators disposed along the perimeters of the through-holes may be bonded to the terminal insulators in step S930. A cap insulator may be in contact with the entire perimeter of each of the terminal insulators. Each of the terminal insulators is bonded to the corresponding cap insulator, for example, by thermal fusion or with an adhesive. The cap insulators are formed by insert molding onto the cap plate.

The method of manufacturing the battery further includes a step of coupling the cap plate to a case receiving the electrode assembly. The coupling step is performed before the step of inserting the terminal assembly into a through-hole. According to an alternative embodiment, the coupling step is performed after the step of bonding the terminal insulator and the cap insulator. The coupling step may include welding the cap plate and the case.

The method further includes a step of inspecting the coupled condition of the cap plate and the case. For example, the condition of the portions coupled by the welding may be inspected by visually inspecting the coupled area, penetrant inspection by applying a penetrant to the weld surface, ultrasonic inspection, two-dimensional X-ray inspection using X-ray, a CT scan, or the like.

FIGS. 11 and 12 are schematic diagrams showing examples of the method of manufacturing a battery according to various embodiments of the present disclosure.

FIG. 11 illustrates an example in which a step 1008 of coupling a cap plate 1020 to a case 1030 accommodating an electrode assembly 1010 is performed before a step of inserting terminal assemblies into through-holes. Referring to FIG. 11, a method of manufacturing a battery may be started by a step 1001 of coupling terminal assemblies 1012 to the electrode assembly 1010. For the sake of brevity, the terminal assemblies 1012 are shown as blocks in FIG. 11, but the present disclosure is not limited thereto.

Thereafter, the cap plate 1020 may be coupled to the case 1030 accommodating the electrode assembly 1010 in the step 1008. The cap plate 1020 may include through-holes 1024 and cap insulators. The case 1030 may have the shape of a square column with opposite sides of the case 1030 being open. In FIG. 11, the case is shown in the shape of a prismatic secondary battery, but the present disclosure is not limited thereto, and may have different shapes depending on the type of the battery.

Subsequently, in step 1002, the electrode assembly 1010 is inserted into the case 1030 to which the cap plate 1020 is coupled. At substantially the same time, the terminal blocks of the terminal assemblies 1012 coupled to the electrode assembly 1010 may be inserted into the through-holes 1024 provided in the cap plate 1020.

Thereafter, in step 1003, the cap insulators disposed along the perimeters of the through-holes 1024 may be bonded to the terminal insulators of the terminal assemblies 1012.

The step 1008 of coupling the cap plate 1020 to the case 1030 accommodating the electrode assembly 1010 may include welding the cap plate 1020 to the case 1030. Specifically, the cap plate 1020 may be disposed on the case 1030 and welded to the long and short sides of the case 1030.

According to another embodiment, the step 1008 of coupling the cap plate 1020 to the case 1030 accommodating the electrode assembly 1010 includes a step of forming the cap plate 1020 integrally with the case 1030. For example, the cap plate 1020 and the case 1030 may be integrally formed by a deep drawing process. The deep drawing process is a plate pressing process using a punch and a die in which outer peripheral portions of the plate are pressed inward to form a seamless bottomed container or the like. As a result, the sides of the case 1030 and the cap plate 1030 may be integrally formed.

FIG. 12 illustrates an example in which a step 1009 of coupling a cap plate 1020 to a case 1030 accommodating an electrode assembly 1010 is performed after a step of bonding terminal insulators and cap insulators. Referring to FIG. 12, a method of manufacturing a battery may be started by a step 1001 of coupling terminal assemblies 1012 to the electrode assembly 1010 as in method shown in FIG. 11. For the sake of brevity, the terminal assemblies 1012 are shown as blocks in FIG. 12, but the present disclosure is not limited thereto.

Subsequently, in step 1002, the terminal blocks of the terminal assemblies 1012 coupled to the electrode assembly 1010 may be inserted into through-holes 1024 provided in the cap plate 1020.

Thereafter, in step 1003, the cap insulators disposed along the perimeters of the through-holes 1024 may be bonded to the terminal insulators of the terminal assemblies 1012.

Thereafter, in step 1009, the cap plate 1020 may be coupled to the case 1030 accommodating the electrode assembly 1010. In an embodiment, the case 1030 may have the shape of a square column with opposite sides of the case 1030 being open. In FIG. 12, the case is shown in the shape of a prismatic secondary battery. But the present disclosure is not limited thereto, and the case may have different shapes depending on the type of the battery. Thus, the open portion shown as the top part of the case is not limited thereto. In contrast to what is shown, the open portion may be provided on any one side of the case 110.

Batteries manufactured by the manufacturing method according to embodiments of the present disclosure may be used in vehicles, mobile phones, and/or various other forms of electrical devices.

The present disclosure is not limited to the above embodiments, and the case may be configured in various shapes, such as a circular shape and a pouch shape. Further, the case may be made of a metal, such as aluminum, aluminum alloy, or nickel-plated steel, a laminated film, or plastic (e.g., in a pouch-type embodiment).

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure.

### [DESCRIPTION OF SOME REFERENCE SYMBOLS]

100: battery
110: case
120: terminal assembly
122: terminal block
124: terminal insulator
132: cap plate
134: through-holes
136: cap insulator

## Claims

1. A battery (100) comprising:
an electrode assembly;
a case (110) accommodating the electrode assembly;
a terminal assembly (120) comprising a subplate electrically connected to the electrode assembly, a terminal block (122) protruding from the subplate, and a terminal insulator (124) positioned around side surfaces of the terminal block (122); and
a cap plate (132) coupled to the case (110),
wherein a through-hole (134) is defined in the cap plate (132) and a cap insulator (136) is disposed around the through-hole 134, and
wherein the terminal block (122) is inserted into the through-hole (134) such that the terminal insulator (124) and the cap insulator (136) are in contact with each other.

2. The battery (100) as claimed in claim 1, wherein the cap insulator (136) is in contact with an entire perimeter of the terminal insulator (124).

3. The battery (100) as claimed in claim 1 or 2, wherein the battery is configured that the terminal insulator (124) and the cap insulator (136) are bonded together by thermal fusion or with an adhesive.

4. The battery (100) as claimed in any of the preceding claims, wherein the terminal block (122) comprises a hollow space (310) formed therein.

5. The battery (100) as claimed in claim 1, wherein the battery is configured that the cap insulator (136) is formed by insert molding with the cap plate 132.

6. The battery (100) as claimed in claim 5, wherein the terminal insulator (124) is formed by insert molding with the terminal block (122).

7. The battery (100) as claimed in claim 1, wherein the cap insulator (436) comprises a first protrusion (438) protruding upward,
the terminal insulator (424) comprises a second protrusion (428) protruding upward, and the first protrusion (438) and
the second protrusion (428) are configured to be bonded together.

8. The battery (100) as claimed in claim 7, wherein the second protrusion (428) is spaced from the terminal block (422).

9. The battery (100) as claimed in claim 1, wherein the cap insulator (536) has a stepped portion (538) on a side surface of the cap insulator (536), and
the stepped portion (538) being in contact with a top surface (528) of the terminal insulator (524) and a side surface of the terminal insulator (524).

10. The battery (100) as claimed in claim 8 or 9, wherein the top surface (528) of the terminal insulator (524) is positioned below a top surface (523) of the terminal block (522).

11. The battery (100) as claimed in claim 1, wherein the cap insulator (636) comprises a hook portion (638) protruding upward, and the terminal insulator (624) comprises a protrusion (628) protruding upward,
wherein the hook portion (638) wraps around the protrusion (628) of the terminal insulator 624.

12. The battery (100) as claimed in claim 1, wherein the cap insulator (736) comprises a projected portion (738) provided on a side surface to protrude toward the terminal block (722), and
the terminal insulator (724) comprises a recessed portion (728) provided on a side surface corresponding to the protruding portion.

13. The battery (100) as claimed in claim 1 or 12, wherein the cap insulator (736) comprises a recessed portion (728) on a side surface, and
the terminal insulator (724) comprises an projected portion (738) provided on a side surface to correspond to the recessed portion (728).

14. The battery (100) as claimed in any of the preceding claims, wherein the terminal assembly (120) comprises a first terminal assembly and a second terminal assembly, and
the first terminal assembly and the second terminal assembly are oriented toward the cap plate (132).

15. The battery 100 as claimed in any of the preceding claims, wherein the terminal assembly (120) comprises a first terminal assembly and a second terminal assembly, and
wherein the first terminal assembly is oriented toward the cap plate (132), and the second terminal assembly is oriented to face a cover plate oriented toward the cap plate (132).
